Europäisches Patentamt

European Patent Office

Office européen des brevets

(11) Veröffentlichungsnummer: **0 033 132**
**B1**

(19)

(12) ## EUROPÄISCHE PATENTSCHRIFT

(45) Veröffentlichungstag der Patentschrift:
25.05.83

(51) Int. Cl.³: **F 16 G 11/10, B 63 B 21/08**

(21) Anmeldenummer: **81100437.3**

(22) Anmeldetag: **22.01.81**

(54) Seilklemme.

(30) Priorität: **29.01.80 CH 725/80**

(43) Veröffentlichungstag der Anmeldung:
**05.08.81 Patentblatt 81/31**

(45) Bekanntmachung des Hinweises auf die Patenterteilung:
**25.05.83 Patentblatt 83/21**

(84) Benannte Vertragsstaaten:
**BE DE FR GB IT NL SE**

(56) Entgegenhaltungen:
**BE-A-541 280**
**DE-B-1 169 819**
**GB-A-1 092 459**

(73) Patentinhaber: **Siegmann, Götz, Rosenstrasse 4,**
**D-7993 Kressbronn (DE)**

(72) Erfinder: **Siegmann, Götz, Rosenstrasse 4,**
**D-7993 Kressbronn (DE)**

(74) Vertreter: **Eisele, Eberhard, Dipl.-Ing. et al,**
**Goetheplatz 7, D-7980 Ravensburg (DE)**

## Seilklemme

Die Erfindung betrifft eine Seilklemme, bei der das Seil durch Seilöffnungen mehrerer plattenförmiger Klemmorgane hindurchgeführt ist, die zwischen einer freien Seildurchlauf gewährenden Offenstellung und einer das Seil entgegen einer Seilzugkraft festhaltenden Klemmstellung um Schwenkachsen schwenkbar gelagert sind, die sich in einem Abstand vom Seil und senkrecht zu diesem in einer gemeinsamen Achsebene erstrecken, wobei die Mittelachsen der Seilöffnungen in der Offenstellung mit der Seilachse übereinstimmen und in der Klemmstellung geneigt zur Seilachse verlaufen, und mit einer manuell betätigbaren Entsperrung.

Eine solche Seilklemme hält ein Seil aus Hanf, Kunstfaser oder Draht zuverlässig an einem frei gewählten Punkt entgegen der in Seilzugrichtung angreifenden Seilzugkraft (Last) fest und sie ist selbsttätig in dem Sinne, daß die Seilzugkraft allein die Klemmvorrichtung betätigt und daß die Arretierung aufgehoben wird, wenn man das Seil zurückzieht.

Eine Seilklemme dieser Art ist in Verbindung mit einem Sicherungsgerät aus der DE-B-1 169 819 bekannt. Die Klemmorgane sind verhältnismäßig dünne Platten, deren Seilöffnungen beidseitig ausgerundet sind. Infolge der geringen Plattendicke gehen die Rundungen der Seilöffnungsränder ineinander über. Eine Innenfläche mit definierbarer Formachse ist bei diesen Seilöffnungen nicht vorhanden.

In der Offenstellung stehen die Klemmplatten senkrecht zur Seilzugrichtung und haben einen gegenseitigen Abstand von wenigstens dem Fünffachen ihrer Dicke. Die Klemmwirkung entsteht dadurch, daß sich die mittels einer Stellstange miteinander gelenkig verbundenen Klemmplatten in Seilzugrichtung neigen und dadurch das Seil zickzackförmig verkanten oder wellenartig verformen. Im Verlauf der Neigungsbewegung der Klemmplatten wandern die einander diametral gegenüberliegenden Randpartien der Seilöffnungen, welche auf das Seil drücken, in Seilzugrichtung immer weiter auseinander.

Bei sehr hoher Seilzugkraft in der Größenordnung der Bruchlast des Seiles hält die bekannte Klemme jedoch nicht mehr sicher und die Außenfasern des Seiles werden durch die extreme Biegebeanspruchung beschädigt. Ein Lösen der bekannten Klemme ist nur bei entspanntem Seil oder bei Aufbringen einer gleich großen Gegenzugkraft möglich, was bei der Verwendung auf Segelbooten zum Fieren von Segelleinen sehr nachteilig ist.

Aber auch die bekannten Exzenterklemmen, die im Segelsport sehr verbreitet sind, gestatten ohne Gegenzug in der Größenordnung der Last nur ein unkontrolliertes, ruckartiges Auslösen und bewirken eine Herabsetzung der Belastbarkeit des Seiles.

Aus der BE-A-541 280 ist eine Klemmvorrichtung für den Stil eines Besens oder dergleichen bekannt, die einen schwenkbaren Ring aufweist. Dieser ist ziemlich dick und hat eine Öffnung mit zylindrischer Innenfläche und scharfen Innenrändern, die sich bei Neigung der Ringachse bezüglich der Stilachse an einander diametral gegenüberliegenden Stellen in den Stil eindrükken, wobei diese Stellen in Stilrichtung einen verhältnismäßig großen Abstand haben.

Der Erfindung liegt die Aufgabe zugrunde, eine Seilklemme der einleitend bezeichneten Art zu schaffen, bei der die Klemmwirkung annähernd gleich der Bruchlast des Seiles ist und welche es bei voller Seilzugkraft ermöglicht, durch kontrolliertes Verringern der Klemmwirkung frei wählbare Seillängen nachzugeben, ohne daß eine am Seil angreifende Gegenzugkraft erforderlich wäre.

Diese Aufgabe wird erfindungsgemäß dadurch gelöst, daß die Klemmorgane Platten von etwa gleicher Dicke wie das Seil sind, die in der Offenstellung bezüglich der Achsebene entgegen der Seilzugrichtung geneigt sind und sich gegenseitig berühren, und daß das in Seilzugrichtung vordere Klemmorgan mittels eines Handhebels schwenkbar ist.

Die dickeren Klemmorgane ergeben entsprechend tiefere Seilöffnungen und bewirken im Verlauf der Neigungsbewegung der Klemmorgane eine besonders weitgehende Verschiebung des vorderen Randes gegenüber dem hinteren Rand jeder Seilöffnung in der Projektion in Seilzugrichtung, d. h. eine starke Verengung des lichten Öffnungsquerschnitts. Andererseits kommt infolge des geringen Abstandes der Klemmorgane diese Verengung voll zum Tragen. Der vordere obere Rand der Seilöffnung eines Klemmorgans wirkt mit dem hinteren unteren Rand der Seilöffnung des anschließenden Klemmorgans zangenartig zusammen, wodurch örtlich eine echte Klemmung auch der inneren Fasern des Seils eintritt, und zwar an so vielen Stellen, wie Berührungsflächen zwischen Klemmorganen vorhanden sind, beispielsweise bei 4 Klemmorganen drei solcher Klemmstellen. Zur Schonung des Seils wird man die Kanten der Seilöffnungen angemessen ausrunden.

Während bei der bekannten Klemmvorrichtung, bei welcher die Klemmorgane in Offenstellung senkrecht zur Seilachse stehen, die klemmwirksame Querkraft in Abhängigkeit vom Neigungswinkel der Klemmorgane abnimmt, hat die erfindungsgemäß entgegengesetzte Anfangsneigung der Klemmorgane genau den umgekehrten Effekt. Je weiter sich die Klemmorgane aufstellen, desto mehr verengt sich der von den Seilöffnungen gebildete Seilkanal stellenweise und desto mehr Klemmkraft pro Seilzugkraft entsteht, weil der für das Drehmoment der Klemmorgane maßgebende Hebelarm länger wird. Dieser Verstärkungseffekt gewährleistet eine der Bruchlast ebenbürtige Haltekraft, und zwar auch bei Verwendung einer verhältnismäßig kleinen Anzahl von zum Beispiel vier Klemmorganen.

Andererseits aber wird durch den im Vergleich zu der bekannten Seilklemme reziproken funktionellen Zusammenhang von Zug- und Klemmkraft das kontrollierte Nachlassen des Seiles (Fieren) erleichtert. Die Klemmkraft ist mit verhältnismäßig geringer Kraft von Hand kontrolliert steuerbar, indem die Klemmorgane zurückgeneigt werden, wozu der auf das vordere Klemmorgan wirkende Handhebel besonders hilfreich ist. Dieses kontrollierte Nachlassen ist nicht nur für segeltechnische Anwendungen ein großer Vorteil, sondern eröffnet für eine solche Seilklemme eine ganze Reihe völlig neuer Anwendungsmöglichkeiten.

Dicke plattenförmige Klemmorgane sind auch sehr leicht zu lagern. Sie können einfach eine parallel zu einem Plattenrand und parallel zur Plattenebene verlaufende Bohrung erhalten, wobei man den Rand zylindrisch abrundet.

Es hat sich gezeigt, daß es besser ist, wenn die Klemmplatten nicht über eine gemeinsame Stellstange miteinander gelenkig verbunden sind. Sie können sich dann individuell einstellen. Trotzdem ist infolge ihrer gegenseitigen Berührung auch eine gemeinsame Bewegung durch Einwirkung nur auf das vordere oder hintere Klemmorgan möglich. In diesem Zusammenhang wurde der das vordere Klemmorgan schwenkende Handhebel schon erwähnt. Zusätzlich wird vorgeschlagen, daß eine Feder in Seilzugrichtung auf das hintere Klemmorgan drückt. Diese Feder bewirkt die Einleitung des Klemmvorgangs, wenn der Handhebel freigegeben ist. Andererseits läßt sich durch Drücken des Handhebels das Klemmplattenpaket bequem in Richtung zur Offenstellung zurückbewegen, wobei die Klemmkraft allmählich und gleichmäßig nachläßt, so daß man die einsetzende Seilbewegung im Griff behält.

Es ist zweckmäßig, wenn Vorsorge getroffen wird, daß der Handhebel mit Hilfe einer Arretiervorrichtung, beispielsweise einer Rastanordnung, in der Offenstellung der Klemmorgane festgehalten werden kann. Ferner gibt es Anwendungsfälle, in denen ein unabsichtliches Öffnen der in Klemmstellung befindlichen Seilklemme auf alle Fälle verhindert werden muß. Hierzu kann ein besonderer Sicherungshebel vorgesehen sein, welcher in der Klemmstellung eingelegt wird und den Handhebel in der betreffenden Stellung gegen Zurückschwenken abstützt.

Für den Normalfall der Führung und Klemmung von Leinen oder Seilen auf Segelbooten wird vorgeschlagen, daß ein die Klemmorgane umschließendes, oben offenes längliches Gehäuse vorgesehen ist, in dessen Bodenbereich die Klemmorgane gelagert sind, und das auf einer Unterlage befestigbar ist und Seilführungsbohrungen aufweist. Eine solche Seilklemme ist besonders formschön und leicht zu bedienen, wenn der Handhebel als die Seilklemme entgegen der Seilzugrichtung übergreifende Verlängerung des ersten Klemmorgans ausgebildet ist.

Das Gehäuse läßt sich aber auch zum Einbau, beispielsweise in einen Mast, verwenden. In diesem Fall wird man einen Handhebel an der bezüglich der Schwenkachse gegenüberliegenden Seite des vorderen Klemmorgans vorsehen, wobei sich die Betätigungsrichtung Ziehen/Drücken gegenüber der vorerwähnten Bauform umkehrt.

Interessante Anwendungen, insbesondere auf Segelbooten, ergeben sich, wenn jedes Klemmorgan zwei parallele Seilöffnungen nebeneinander aufweist. Es können dann zwei parallele Seile durch eine solche Doppelseilklemme geführt werden. Deren wesentliche Besonderheit besteht darin, daß die auf beide Seile wirkenden Klemmkräfte genau gleich groß sind. So kann beispielsweise ein Seil, welches eine belastete Schleife bildet, ohne Veränderung der Schleifenweite bewegt werden. Dies geschieht durch Einholen des einen Seilendes entgegen der Last. Dabei nähern sich die Klemmorgane der Offenstellung. Damit wird auch die Klemmwirkung auf das zweite Seil verringert und dieses läuft unter derselben Spannung in Richtung Last aus.

Zwei Ausführungsbeispiele der Erfindung werden nachfolgend anhand der Zeichnung erläutert. Im einzelnen zeigt

Fig. 1 einen Längsschnitt einer ersten Seilklemme in Offenstellung,

Fig. 2 diese Seilklemme in einer Klemmstellung, wobei die Klemmplatten senkrecht zur Seilachse stehen,

Fig. 3 die Draufsicht der Grundplatte der Seilklemme nach den Fig. 1 und 2,

Fig. 4 einen Längsschnitt einer weiteren Seilklemme in Offenstellung und

Fig. 5 eine Ansicht einer Klemmplatte der Seilklemme nach Fig. 4 aus zur Plattenebene senkrechter Richtung mit Gehäusequerschnitt und Feder.

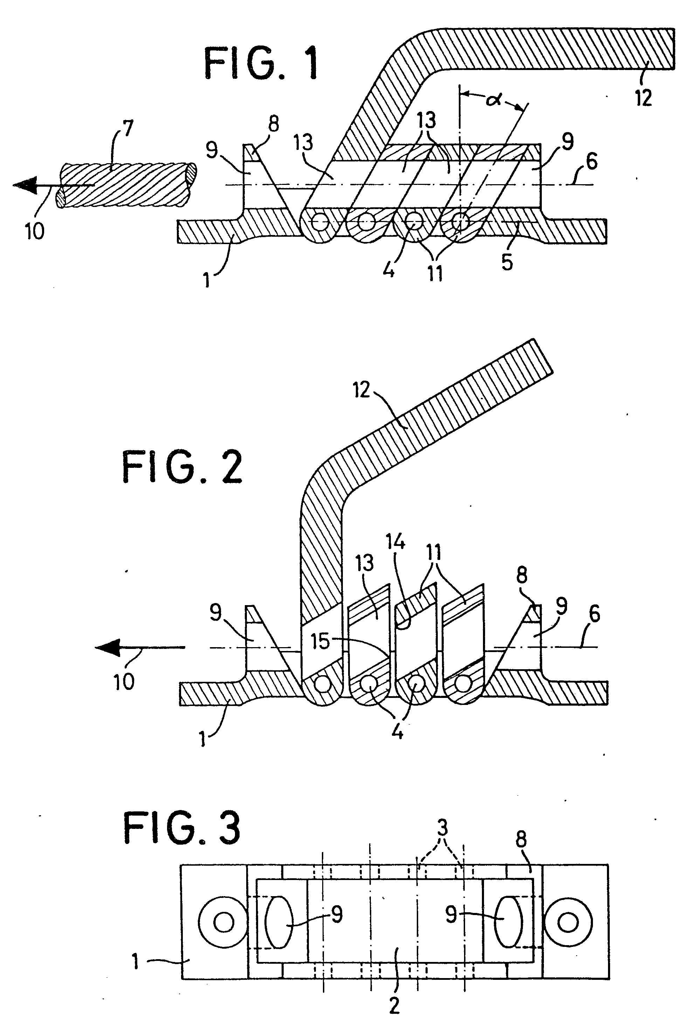

Die Seilklemme nach den Fig. 1 bis 3 weist eine auf eine Unterlage aufschraubbare Grundplatte 1 auf. Diese hat eine Aussparung 2, in deren Seiten parallele Lagerbohrungen 3 für die Aufnahme von Lagerstiften 4 vorgesehen sind. Die Lagerbohrungen 3 befinden sich alle in einer zur Anlagefläche der Grundplatte 1 parallelen Ebene, der sogenannten Achsebene 5. Über dieser und senkrecht zu den Lagerbohrungen 3 erstreckt sich die Seilachse 6 eines bruchstückweise angedeuteten Seiles 7. In zwei nach oben vorstehende Anschlagböcke 8 der Grundplatte 1 sind in Richtung der Seilachse 6 Seilführungsbohrungen 9 eingebracht.

Die Seilzugkraft, welche eine Klemmwirkung hervorbringt, wirkt bei dieser Seilklemme in Richtung des Pfeiles 10. In der Grundplatte 1 sind vier Klemmplatten 11 mit Hilfe der Lagerstifte 4 schwenkbar gelagert. Die in Seilzugrichtung vordere Klemmplatte ist zu einem Hebel 12 verlängert. In der Offenstellung nach Fig. 1 sind die Klemmplatten 11 entgegen der Seilzugrichtung um einen Winkel α von etwa 30° geneigt. Der Abstand der Lagerbohrungen 3 ist gerade so gewählt, daß die Klemmplatten 11 sich bei diesem Neigungswinkel berühren, wobei die bezüglich der Seilzugrichtung hintere Klemmplatte an dem betreffenden Anschlagbock 8 anliegt.

Jede Klemmplatte 11 weist eine zylindrische Seilbohrung 13 auf, wobei diese Seilbohrungen derart schräg zu den Klemmplatten geführt sind, daß sie in der erwähnten geneigten Stellung der Klemmplatten (Offenstellung) insgesamt und mit den Seilführungsbohrungen 9 zusammen einen zylindrischen Seilkanal bilden. In der Offenstellung hat die Seilklemme die Funktion einer Öse, das Seil läuft also frei durch den erwähnten Seilkanal.

Wird der Hebel 12 in Seilzugrichtung geschwenkt, so folgen die übrigen Klemmplatten 11 infolge der Seilreibung dieser Bewegung. Es entstehen linsenförmige Verengungen des Seilkanals, welche das Seil klemmen. Die Seilklemmung wird stärker mit der Abnahme des Neigungswinkels und stellt sich selbsttätig entsprechend der wirksamen Seilzugkraft, der Kompressibilität und der Dicke des Seiles ein. Die Ränder und insbesondere die zangenartig wirkenden vorderen und hinteren Randpartien 14 bzw. 15 der Seilbohrungen 13 sind je nach Seilwerkstoff mehr oder weniger ausgerundet, so daß eine Verletzung des Seiles vermieden wird.

Der Seilkanal verengt sich weiter, wenn die Klemmplatten 11 über die in Fig. 2 gezeigte Stellung hinaus in Seilzugrichtung weitergeschwenkt werden. Dieser Fall tritt aber normalerweise nicht auf, wenn das Seil die Seilbohrungen 13 im wesentlichen ausfüllt, was anzustreben ist.

Durch Niederdrücken des Hebels 12 kann die Klemmwirkung in kontrollierter Weise reduziert werden, so daß das Seil um beliebige Beträge entspannt und abgefiert werden kann.

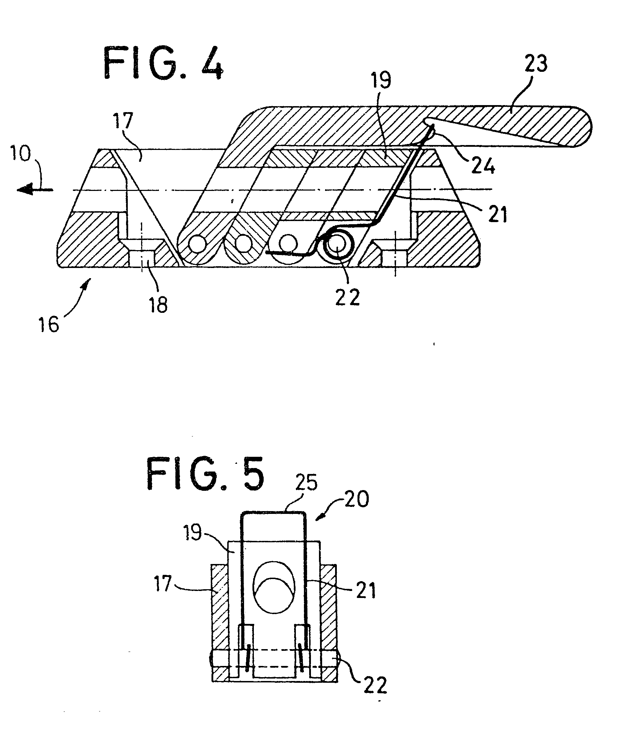

Bei dem zweiten Ausführungsbeispiel nach den Fig. 4 und 5 ist die Grundplatte zu einem Gehäuse 16 weitergebildet, welches eine ringsum gleich hohe Wand 17 und innenliegende Befestigungsbohrungen 18 aufweist. Hinter der in Seilzugrichtung hinteren Klemmplatte 19 ist eine aus Draht gebogene Feder 20 angeordnet. Ihre beiden Schenkel 21 sind um den Lagerstift 22 der Klemmplatte 19 herumgewickelt und stützen sich mit ihren Enden am benachbarten Lagerstift ab. Diese Feder 20 hat das Bestreben, die Klemmplatte 19 und damit auch die übrigen Klemmplatten in Seilzugrichtung zu schwenken. Andererseits dient sie zum Festhalten des Hebels 23 in der Offenstellung. Eine an der Unterseite des Hebels 23 angebrachte Nase 24 rastet — wie in Fig. 4 gezeigt — unter dem waagerechten Abschnitt 25 der Feder 20 ein und kann durch ruckartiges Hochziehen des Hebels leicht wieder gelöst werden.

**Patentansprüche**

1. Seilklemme, bei der das Seil (7) durch Seilöffnungen (13) mehrerer plattenförmiger Klemmorgane (11) hindurchgeführt ist, die zwischen einer freien Seildurchlauf gewährenden Offenstellung und einer das Seil (7) entgegen einer Seilzugkraft festhaltenden Klemmstellung um Schwenkachsen (4) schwenkbar gelagert sind, die sich in einem Abstand vom Seil (7) und senkrecht zu diesem in einer gemeinsamen Achsebene (5) erstrecken, wobei die Mittelachsen der Seilöffnungen (13) in der Offenstellung mit der Seilachse (6) übereinstimmen und in der Klemmstellung geneigt zur Seilachse (6) verlaufen, und mit einer manuell betätigbaren Entsperrung, dadurch gekennzeichnet, daß die Klemmorgane (11) Platten von etwa gleicher Dicke wie das Seil (7) sind, die in der Offenstellung bezüglich der Achsebene (5) entgegen der Seilzugrichtung (10) geneigt sind und sich gegenseitig berühren, und daß das in Seilzugrichtung (10) vordere Klemmorgan mittels eines Handhebels (12, 13) schwenkbar ist.

2. Seilklemme nach Anspruch 1, dadurch gekennzeichnet, daß eine in Seilzugrichtung (10) auf das hintere Klemmorgan (19) drückende Feder (20) vorgesehen ist.

3. Seilklemme nach Anspruch 1, gekennzeichnet durch eine Vorrichtung (24, 25) zur Arretierung des Handhebels (23) in der Offenstellung der Klemmorgane (11).

4. Seilklemme nach Anspruch 1, dadurch gekennzeichnet, daß ein die Klemmorgane (11) umschließendes, oben offenes längliches Gehäuse (16) vorgesehen ist, in dessen Bodenbereich die Klemmorgane (11) gelagert sind und das auf einer Unterlage befestigbar ist und Seilführungsbohrungen (9) aufweist.

5. Seilklemme nach Anspruch 1, dadurch gekennzeichnet, daß der Handhebel (12, 23) als die Seilklemme entgegen der Seilzugrichtung übergreifende Verlängerung des ersten Klemmorgans ausgebildet ist.

6. Seilklemme nach Anspruch 1, dadurch gekennzeichnet, daß jedes Klemmorgan (11) zwei parallele Seilöffnungen nebeneinander aufweist.

**Claims**

1. Cable clamp, in which the cable (7) is conducted through cable openings (13) of several clamp elements (11) of plate form which are mounted pivotably about pivot axes (4) between an open position permitting free cable passage and a clamping position which holds the cable (7) fast against a cable traction force, which pivot axes extend at a distance from the cable (7) and perpendicularly thereof in a common axis plane (5), while the central axes of the cable openings (13) coincide with the cable axis (6) in the open position, and extend at an inclination to the cable axis (6) in the clamping position, and with a manually actuatable release, characterised in that the clamping elements (11) are plates of about the same thickness as the cable (7), which in the open position are inclined in relation to the axis plane (5) contrarily of the direction (10) of cable traction and are in mutual contact, and in that the forward clamping element, in the direction (10) of cable traction, is pivotable by means of a hand lever (12, 23).

2. Cable clamp according to Claim 1, characterised in that a spring (20) is provided which presses in the cable traction direction (10) upon the rear clamp element (19).

3. Cable clamp according to Claim 1, characterised by a device (24, 25) for arresting the hand lever (23) in the open position of the clamp elements (11).

4. Cable clamp according to Claim 1, characterised in that an upwardly open, elongated housing (16) enclosing the clamp elements (11) is provided in the bottom region of which the clamp elements (11) are mounted and which is securable on a base and comprises cable guidance bores (9).

5. Cable clamp according to Claim 1, characterised in that the hand lever (12, 23) is formed as an extension of the first clamp element extending contrarily of the cable traction direction over the cable clamp.

6. Cable clamp according to Claim 1, characterised in that each clamp element (11) comprises two parallel cable openings side by side.

## Revendications

1. Serre-câble du type dans lequel le câble (7) est introduit en traversant une pluralité d'organes de serrage (11) de forme plane et pourvus d'ouvertures pour le passage du câble, les organes de serrage étant montés à pivotement par l'intermédiaire de tourillons (4), entre une position d'ouverture maintenant libre le passage du câble et une position de serrage assurant le blocage du câble (7), à l'encontre d'une traction exercée sur celuici, les tourillons (4) s'étendant à une certaine distance du câble (7) et perpendiculairement par rapport à l'axe du câble, les tourillons étant situés dans un plan commun (5), de sorte que les axes médians des ouvertures (13) de passage du câble, correspondent à l'axe (6) du câble dans la position d'ouverture et sont inclinés par rapport audit axe (6), en position de serrage, le dispositif étant pourvu d'un blocage manuel, et le dispositif est caractérisé en ce que les organes de serrage (11) sont formés de plaques d'épaisseur sensiblement égale à celles du câble (7), les plaques étant, dans leur position d'ouverture, jointives et inclinées par rapport au plan commun des tourillons (5), à l'encontre de la direction (10) de traction exercée sur le câble, et en ce que le premier organe de serrage (en direction de la traction exercée sur le câble) est susceptible d'être actionné en pivotement par une manette.

2. Serre-câble selon la revendication 1, caractérisé en ce qu'il comporte un ressort (20) rappelant l'organe de serrage arrière (19) en direction de la traction (10) exercée sur le câble.

3. Serre-câble selon la revendication 1, caractérisé en ce qu'il comporte des moyens de blocage (24, 25), de la manette (23) dans la position d'ouverture des organes de serrage (11).

4. Serre-câble selon la revendication 1, caractérisé en ce qu'il comporte un boitier (16) allongé et ouvert vers le haut, entourant les organes de serrage (11), dans la base duquel sont montés lesdits organes de serrage (11), le boitier étant apte à être fixé sur un socle et comportant des lumières (9) pour le passage du câble.

5. Serre-câble selon la revendication 1, caractérisé en ce que la manette (23) est formée par le prolongement du premier organe de serrage, rabattu sur l'ensemble du serre-câble dans une direction opposée à la direction (20) de traction sur le câble.

6. Serre-câble selon la revendication 1, caractérisé en ce que chaque organe de serrage (11) présente deux ouvertures parallèles et côte à côte, pour le passage du câble.

FIG. 1

FIG. 2

FIG. 3

# FIG. 4

# FIG. 5